**Europäisches Patentamt**

(19) **European Patent Office**

**Office européen des brevets**

(11) Numéro de publication: **0 112 781**
**B1**

(12) # FASCICULE DE BREVET EUROPÉEN

(45) Date de publication du fascicule du brevet:
**18.03.87**

(21) Numéro de dépôt: **83402523.1**

(22) Date de dépôt: **23.12.83**

(51) Int. Cl.⁴: **G 01 B 7/34,** G 01 L 5/10,
B 21 B 37/06

(54) **Dispositif de mesure de la planéité d'une bande de métal sous tension.**

(30) Priorité: **24.12.82 FR 8221740**

(43) Date de publication de la demande:
**04.07.84 Bulletin 84/27**

(45) Mention de la délivrance du brevet:
**18.03.87 Bulletin 87/12**

(84) Etats contractants désignés:
**AT BE CH DE GB IT LI LU NL SE**

(56) Documents cité:
**DE-A-2 848 638**
**US-A-3 890 834**
**US-A-4 245 869**

(73) Titulaire: **CLECIM, 107 boulevard de la Mission
Marchand, F-92400 Courbevoie (FR)**

(72) Inventeur: **Valence, Marc, 14 avenue Dubonnet,
F-92400 Courbevoie (FR)**

(74) Mandataire: **Phélip, Bruno, c/o Cabinet Harlé &
Phélip 21, rue de la Rochefoucauld, F-75009 Paris
(FR)**

## Description

L'invention concerne un dispositif de mesure de la planéité d'une bande de métal sous tension.

Lors du laminage ou de l'étirage de bandes de tôles métalliques telles que des tôles d'aluminium, il est nécessaire de détecter les défauts de planéité éventuels de ces bandes et de remédier à ces défauts en agissant sur les conditions de laminage ou d'étirage. Il est également nécessaire d'opérer un contrôle de qualité du produit en fin d'opération, sur la bande mise en tension, en défilement ou non, pour détecter des défauts de planéité éventuels sous forme de poches au centre de la tôle ou de vagues sur les rives de cette tôle.

Ces défauts peuvent résulter de l'opération de formage de la bande qui peut s'accompagner de réduction d'épaisseurs différentes suivant la largeur de celle-ci.

Pour contrôler l'état de planéité de la bande, en cours de formage ou à l'issue de l'opération de formage, on a proposé des dispositifs de mesure comportant un rouleau de déflection de la bande métallique de direction transversale par rapport à cette bande. La bande métallique est maintenue en tension et applique de ce fait sur le rouleau une force de direction radiale qui peut être variable dans la direction transversale de la bande, c'est-à-dire dans la direction longitudinale du rouleau, si la bande n'est pas parfaitement plane.

On connaît en particulier des rouleaux de planéité qui sont constitués par un arbre portant une pluralité de bagues montées rotatives sur cet arbre les unes à la suite des autres dans la direction axiale du rouleau. A chacune des bagues, on associe un détecteur de contrainte qui permet la mesure de la force de direction radiale exercée par la bande au droit de la bague considérée.

La mesure des forces radiales au droit de chacune des bagues permet de déterminer la variation de traction dans la bande suivant sa largeur, ce qui donne une image de la planéité de la bande. Les bagues sont donc disposées les unes à la suite des autres relativement libres dans leur mouvement dans la direction radiale ce qui crée des discontinuités sur la surface du rouleau qui peuvent être préjudiciables au bon état final de la bande métallique. En effet, le rouleau de planéité est utilisé la plupart du temps en fin du processus d'élaboration des bandes qui ont alors un très bon état de surface. Les discontinuités du rouleau de planéité peuvent provoquer l'apparition de marques à la surface de la bande métallique.

On cherche donc à mesurer les forces radiales avec des déplacements ou déformations très faibles des bagues constituant les tranches successives de mesure. On doit donc utiliser des capteurs de très grande sensibilité qui sont susceptibles de subir l'influence perturbatrice de nombreux facteurs tels que par exemple un échauffement dissymétrique du rouleau.

Les bagues peuvent être montées sur l'arbre du rouleau les unes à la suite des autres, de façon à constituer les bagues externes de paliers à billes ou à rouleaux dont on mesure la déformation radiale sous l'effet de la bande de métal sous tension s'appuyant sur le rouleau.

On a également proposé, dans le document DE-A-2848638, de réaliser le montage des bagues sur l'arbre du rouleau de façon à constituer des paliers magnétiques ou fluides dans lesquels chacune des bagues est supportée par des aimants permanents ou par une couche de fluide sous pression intercalés entre l'arbre et la bague. Les paliers sont ainsi à frottements très faible et l'on peut mesurer les contraintes radiales exercées par la tôle en mesurant le déplacement des bagues pour une pression du fluide donnée, au moyen d'un détecteur d'écartement fixé sur l'arbre au centre de chaque bague.

On peut également mesurer les forces radiales en déterminant les pressions de fluide nécessaires pour obtenir un déplacement des bagues prédéterminé.

Cependant, la surface du rouleau de planéité présente des discontinuités qui peuvent être néfastes si l'on veut maintenir un bon état de surface de la bande métallique, en particulier lorsque la bande est en un métal tel que l'aluminium presentant une dureté relativement faible.

D'autre part, la détermination de la traction dans la bande au niveau de chacune des bagues se fait de façon indirecte et nécessite des capteurs de déplacement ou de mesure de pression.

Le but de l'invention est donc de proposer un dispositif de mesure de la planéité d'une bande de métal sous tension comportant un rouleau de déflection transversal par rapport à la bande constitué par un arbre portant une pluralité de bagues montées rotatives sur l'arbre les unes à la suite des autres, dans la direction axiale du rouleau, ce dispositif permettant d'éviter l'apparition de discontinuités sur la surface externe du rouleau et procurant une méthode de mesure directe de la traction de la bande au niveau de chacune des bagues.

Dans ce but, chacune des bagues est montée sur l'arbre par l'intermédiaire d'au moins un palier magnétique actif constitué par au moins un bobinage de puissance et au moins un détecteur d'écartement et le dispositif comporte en outre un moyen de réglage des courants d'excitation des bobinages de puissance en fonction des écartements mesurés par les détecteurs correspondants pour maintenir un entrefer constant entre chacune des bagues et l'arbre et un moyen de détermination, à partir de ces courants d'excitation, de la traction dans la bande au niveau de chacun des paliers magnétiques, représentative de la planéité de la bande.

Un type de palier magnétique actif utilisable pour l'invention est décrit par exemple dans le document US-A-4245869. Il comporte, autour d'un arbre fixe formant stator une bague formant rotor et des bobinages de puissance répartis autour de l'axe et dont les courants d'excitation sont réglés par des bobinages de mesure constituant des détecteurs d'écartement et associés chacun à un bobinage de puissance.

Afin de bien faire comprendre l'invention, on va maintenant décrire à titre d'exemple non limitatif un dispositif de mesure de planéité suivant l'invention utilisable pour mesurer la planéité et la traction dans une bande de métal sous tension, telle qu'une bande d'aluminium de faible épaisseur.

La figure 1 représente dans une vue en coupe schématique par un plan de symétrie une partie d'un rouleau de planéité comportant deux bagues successives.

La figure 2 représente une vue schematique suivant A de la figure 1.

La figure 3 représente, dans une vue en coupe transversale, un rouleau de planéité suivant une variante de réalisation.

La figure 4 représente de façon schématique l'ensemble du disposif de mesure suivant l'invention.

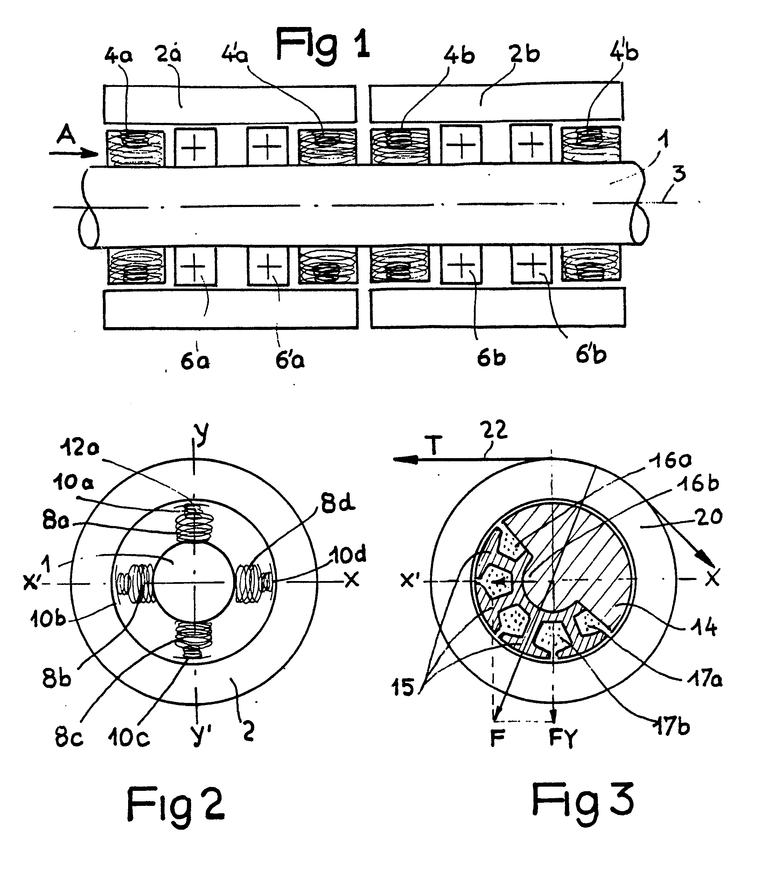

Sur la figure 1, on voit l'arbre 1 d'un rouleau de déflection d'un dispositif de mesure de planéité suivant l'invention. Cet arbre 1 est fixe et disposé horizontalement.

Sur cet arbre 1 sont montées rotatives, autour de l'axe 3 du rouleau confondu avec l'axe de l'arbre 1, des bagues 2 par l'intermédiaire de paliers magnétiques 4. Selon l'une des caractéristiques de l'invention, chacune des bagues (telles que $2_a$ et $2_b$) est montée sur l'arbre 1 par l'intermédiaire de deux paliers magnétiques ($4_a$ et $4'_a$ pour la bague $2_a$ et $4_b$ et $4'_b$ pour la bague $2_b$) situés à chacune des extrémités longitudinales de la bague.

Entre les paliers magnétiques $4_a$ et $4'_a$ et $4_b$ et $4'_b$ respectivement sont montés des paliers à billes à grand jeu $6_a$ et $6'_a$ et $6_b$ et $6'_b$. Ces paliers à billes permettent de supporter les bagues $2_a$ et $2_b$ respectivement lorsque les paliers magnétiques ne sont pas alimentés.

En se reportant à la figure 2, on voit la constitution d'un palier magnétique actif (tel que le palier $4_a$).

Le palier magnétique représenté sur la figure 2 comporte quatre bobinages de puissance 8 et quatre bobinages de mesure 10 constitués par des tores disposés coaxialement deux à deux.

En réalité, le palier est constitué par l'arbre 1 portant les bobinages et constituant le stator et par la bague 2 constituant le rotor. Nous désignerons cependant par palier magnétique l'ensemble des bobinages permettant le maintien et le support de la bague 2 par rapport à l'arbre 1.

Le palier magnétique ainsi défini et représenté sur la figure 2 comporte deux bobinages de puissance $8_a$ et $8_c$ disposés avec leur axe suivant la direction Y'Y suivant l'axe desquels sont disposés respectivement les bobinages de mesure d'écartement $10_a$ et $10_c$ ainsi que deux bobinages de puissance $8_b$ et $8_d$ disposés avec leur axe suivant la direction X'X perpendiculaire à la direction Y'Y, suivant l'axe desquels sont disposés des bobinages de mesure $10_b$ et $10_d$.

Les bobinages de mesure $10_a$ à $10_d$ délivrent un courant qui est fonction de la distance séparant l'extrémité de mesure 12 du capteur de la surface interne de la bague 2. Les bobinages de puissance 8 fonctionnent par attraction de la bague 2 si bien que chacun des bobinages de mesure 10 commande le bobinage de puissance qui lui est opposé sur le stator 1. Ainsi, le bobinage $10_a$ détermine le courant d'excitation du bobinage de puissance $8_c$ alors que le bobinage de mesure $10_c$ commande le courant d'excitation du bobinage de puissance $8_a$.

Sur l'axe X'X, de la même façon, le bobinage de mesure $10_b$ commande le courant d'excitation du bobinage de puissance $8_d$ alors que le bobinage de mesure $10_d$ commande l'excitation du bobinage de puissance $8_b$.

La commande des courants d'excitation se fait de façon à maintenir un écartement fixe entre les parties de mesure 12 des bobinages 10 et la surface interne de la bague 2.

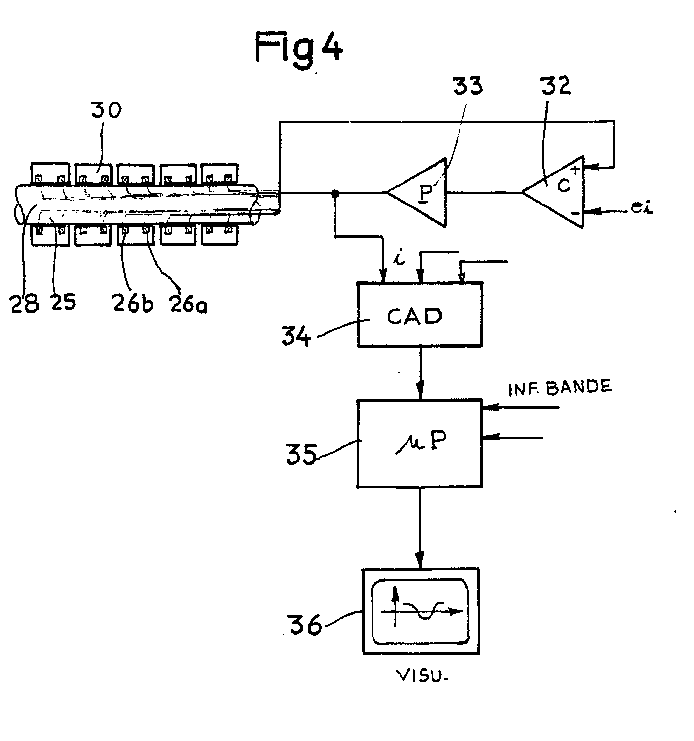

Sur la figure 3 on voit un rouleau de planéité d'un dispositif de mesure suivant l'invention dont le stator 14 est usiné pour constituer quatre pièces polaires 15 sur lesquelles sont enroulées une paire de bobinages $16_a$ et $16_b$ et une paire de bobinages $17_a$ et $17_b$ respectivement.

L'alimentation des bobinages permet de maintenir la bague 20 en matériau magnétique par rapport au stator 14 avec un entrefer constant.

La bande 22 est en contact avec la surface externe de la bague 20 suivant un arc correspondant à l'angle d'enroulement $\Theta$ de cette bande.

Une traction T s'exerce dans la bande qui exerce ainsi sur le rouleau, au niveau de la bague 20, des forces radiales de résultante F situées dans le quadrant inférieur gauche du rouleau. Cette force F se décompose en force $F_x$ et $F_y$ suivant les axes X'X et Y'Y respectivement.

Les courants d'excitation des bobinages $16_a$ et $16_b$ disposés symétriquement par rapport à la direction X'X permettent de déterminer la composante $F_x$ de la force radiale F alors que les bobinages $17_a$ et $17_b$ disposés symétriquement par rapport à la direction Y'Y permettent de déterminer la composante $F_y$ de F.

En effet, les forces d'attraction magnétique exercées par les bobinages enroulés sur les pièces polaires sont fonction du courant d'excitation et sont dirigées suivant X'X et Y'Y respectivement.

A l'équilibre et à entrefer constant, ces forces magnétiques sont donc égales à $F_x$ et $F_y$ respectivement, si bien que les courants d'excitation permettent de déterminer les deux composantes de la force F.

Pour chacune des bagues 20 constituant le rouleau, on peut déterminer la force radiale exercée par la bande, cette force F étant égale à $\sqrt{F_x^2 + F_y^2}$.

Cette force F est proportionnelle à la traction T exercée par la bande sur la bague 20 considérée. La connaissance des valeurs de F pour chacune des bagues permet donc de connaître la répartition des tractions dans la bande et donc de donner une image de la planéité de cette bande suivant sa largeur.

La détermination des courants d'excitation pour maintenir un entrefer constant entre le stator et le rotor du palier magnétique permet donc d'avoir une représentation de la planéité de la bande.

Dans le cas où l'orientation de la bande et l'angle d'enroulement de celle-ci sur le rouleau restent constants, la force résultante F est également de direction constante, si bien qu'il est possible d'utiliser un stator comportant uniquement deux pièces polaires sur lesquelles est enroulée une seule paire de bobinages.

Sur la figure 4, on a représenté de façon très schématique un rouleau de planéité tel que représenté aux figures 1 et 2 et comportant un arbre fixe 25 sur lequel sont montés des paliers magnétiques 26 groupés par paires correspondant chacune à une bague 30.

Chacun des paliers magnétiques 26 est constitué par quatre bobinages de puissance et quatre bobinages de mesure d'écartement disposés à 90°.

L'arbre 25 est percé suivant son axe d'une ouverture cylindrique 28 à l'intérieur de laquelle on fait passer les fils d'alimentation des différents bobinages de puissance et les fils de mesure venant des bobinages de mesure des différents paliers magnétiques 26.

Chacun des fils reliés aux bobinages de mesure délivrant un courant fonction de l'entrefer entre le stator et le rotor au niveau du bobinage de mesure correspondant est amené à un amplificateur-comparateur 32 qui permet la comparaison des différents signaux de mesure avec un signal $e_i$ représentatif d'une valeur d'entrefer prédéterminée. La différence entre le signal de mesure et le signal représentatif de la valeur d'entrefer est envoyée à un amplificateur de puissance 33. Le signal d'écart est amplifié puis envoyé sous forme d'un courant d'excitation au bobinage de puissance commandé par le bobinage de mesure considéré. Pour un rouleau comportant bagues supportées chacune par deux paliers à deux axes, on utilisera donc 4N ensembles identiques 32-33.

En sortie des 4N amplificateurs 33, les 4N courants d'excitation sont envoyés dans un module de conversion analogique-digital 34.

Puis les informations numériques obtenues sont envoyées dans un mini-calculateur 35 qui convertit les valeurs numériques i des courants en forces F à l'aide de fonctions $F = \varphi$ (i) mises en mémoire.

Les forces radiales F permettent le calcul de la traction dans la bande, au niveau du palier magnétique correspondant, dans le mini-calculateur 35. Le mini-calculateur 35 assure également le traitement numérique préalable à l'édition des résultats sous forme de courbe ou de paramètres de polynomes de modélisation.

L'affichage des résultats par l'unité de visualisation 36 commandée par le calculateur 35 peut être réalisé par un écran sur lequel on fait apparaître la valeur de la traction en fonction de la position du point de mesure, c'est-à-dire du palier magnétique, suivant la largeur de la bande.

En plus de ces fonctions de calcul ou de commande d'affichage, le calculateur peut assurer la commande de moyens agissant sur le profil de la bande, tels qu'une cage de laminoir, par exemple.

On peut remarquer que pour chacune des bagues 30 on dispose de deux mesures de la traction et qu'ainsi on multiplie par deux le nombre de points de mesure et donc le pouvoir de résolution transversal du dispositif de mesure.

L'écartement entre les bagues successives 30 (ou 2 sur la figure 1) a une valeur très faible et correspond au jeu minimum pour que ces bagues puissent se déplacer indépendamment les unes des autres. Ce jeu minimum est maintenu par des aimants permanents montés dans les flancs des bagues.

D'autre part, l'entrefer e entre le stator et la surface interne de ces bagues est maintenu à une valeur fixe et constante pour l'ensemble des bagues, si bien que le système présente une rigidité très grande lorsque les bobinages de puissance sont alimentés de façon souhaitable.

Il en résulte que le rouleau de planéité est pratiquement équivalent à un rouleau rigide dont la surface externe est entièrement lisse. Les risques de marquage de la bande sont donc inexistants.

Un autre avantage du dispositif suivant l'invention est de permettre une détermination directe des valeurs de la traction, à partir des courants d'excitation des bobinages de puissance, eux-mêmes déterminés à partir du signal d'écart entre le signal donné par le bobinage de mesure et la valeur prédéterminée de l'entrefer.

On s'aperçoit également que le dispositif permet d'éliminer l'influence de l'angle d'enroulement de la bande sur le rouleau puisqu'on détermine en définitive la résultante des forces radiales de cette bande sur le rouleau de planéité. C'est le cas en particulier du dispositif représenté à la figure 3 où la détermination des composantes $F_x$ et $F_y$ de la force F permet sa détermination quantitative quel que soit l'angle d'enroulement de la bande 22 sur la bague externe du rouleau. Dans le cas du dispositif représenté à la figure 3, on peut également déterminer la traction totale exercée par la bande et l'angle de déviation de la bande par le rouleau à partir du rapport $F_y/F_x$ donnant la tangente de cet angle.

L'invention ne se limite pas au mode de réalisation qui a été décrit; elle en comporte au contraire toutes les variantes.

C'est ainsi qu'il est possible d'imaginer une disposition quelconque des bobinages de puissance et des bobinages de mesure d'écartement sur le stator du rouleau de planéité. Cette disposition peut être entièrement symétrique comme représenté sur les figures 1 et 2 ou au contraire dissymétrique comme représenté sur la figure 3.

Les paliers magnétiques peuvent fonctionner par attraction ou par répulsion.

L'invention s'applique dans tous les cas où l'on veut mesurer la planéité d'une bande de métal tendue, en continu, la bande étant en défilement ou de façon discontinue, la bande étant mise en appui sur le rouleau de déflection.

**Revendications**

1. Dispositif de mesure de la planéité d'une bande de métal sous tension comportant un rouleau de déflection transversal par rapport à la bande constitué par un arbre (1) portant une pluralité de bagues (2) montées rotatives sur l'arbre (1), les unes à la suite des autres, dans la direction axiale du rouleau, chacune par l'intermédiaire d'au moins un palier magnétique, chaque bague étant associée à au moins un détecteur (10), fixé sur l'arbre (1), de mesure de l'écartement entre le rotor et le stator du palier magnétique, caractérisé par le fait que chacun des paliers magnétiques de chacune des bagues (2) est un palier magnétique actif (4) constitué par au moins un bobinage de puissance (8) associe à au moins un détecteur d'écartement (10) et que le dispositif comporte en outre un moyen de réglage (32-33) des courants d'excitation des bobinages de puissance (8) en fonction des écartements mesurés par les détecteurs (10) correspondants pour maintenir un entrefer "e" constant entre chacune des bagues (2) et l'arbre (1) et un moyen (35) de détermination, à partir de ces courants d'excitation, de la traction dans la bande au niveau de chacun des paliers magnétiques (4), représentative de la planéité de la bande.

2. Dispositif de mesure de planéité suivant la revendication 1, caractérisé par le fait que chacune des bagues (2a, 2b...) est montée sur l'arbre (1) par l'intermédiaire de deux paliers magnétiques (4a, 4'a) (4b, 4'b) situés à chacune des extrémités longitudinales de la bague.

3. Dispositif de mesure de planéité suivant l'une quelconque des revendications 1 et 2, caractérisé par le fait que chacun des paliers magnétiques (4) est constitué par au moins deux bobinages de puissance (8) et au moins deux bobinages de mesure (10) constituant les détecteurs d'écartement (10) lesdits bobinages de puissance (8) et de mesure (10) étant fixés sur l'arbre en des positions décalées angulairement autour de l'axe de cet arbre (1).

4. Dispositif de mesure de planéité suivant la revendication 3, caractérisé par le fait que chacun des paliers magnétiques (4) est constitué par quatre bobines de puissance (8a, 8b, 8c, 8d)

disposées à 90° sur l'arbre (1) avec leurs axes alignés deux à deux et par quatre bobines de mesure (10a, 10b, 10c et 10d) coaxiales aux bobines de puissance (8).

5. Dispositif de mesure de planéité suivant la revendication 3, caractérisé par le fait que le palier magnétique est constitué par au moins deux paires de pôles usinés dans une pièce magnetique solidaire de l'arbre (14) sur lesquels sont enroulés les bobinages (16 et 17), placés dans une position opposée à la zone d'appui de la bande (22) sur le rouleau par rapport à l'axe de celui-ci.

6. Dispositif de mesure de planéité suivant la revendication 5, caractérisé par le fait que l'arbre (14) porte une pièce magnétique usinée pour constituer deux paires de pôles magnétiques (15) sur lesquels sont disposés des enroulements (16-17) créant des forces magnétiques perpendiculaires entre elles, la mesure des courants d'excitation de ces bobinages permettant le calcul de deux composantes de la force normale d'appui de la bande sur le rouleau.

7. Dispositif de mesure de planéité suivant l'une quelconque des revendications 1 à 8, caractérisé par le fait qu'il comporte un moyen de détermination de la traction totale exercée dans la bande au niveau du rouleau, par sommation des tractions au niveau de chacune des bagues (30).

8. Dispositif de mesure de planéité suivant la revendication 6, caractérisé par le fait qu'il comporte un moyen de détermination de l'angle de déviation de la bande sur le rouleau, à partir des composantes perpendiculaires de la force d'appui de la bande (22) sur le rouleau.

**Patentansprüche**

1. Vorrichtung zum Messen der Planheit eines gespannten Stahlbandes, bestehend aus einer quer zum Band angeordneten Ablenkrolle, die eine Welle (1) aufweist mit einer Mehrzahl jeweils über mindestens ein Magnetlager hintereinander in Axialrichtung der Rolle auf der Welle (1) drehbar montierter Ringe (2), wobei zum Messen des Abstandes zwischen dem Rotor und dem Stator des Magnetlagers jedem Ring mindestens ein auf der Welle (1) befestigter Messfühler (10) zugeordnet ist, dadurch gekennzeichnet, dass jedes Magnetlager der jeweiligen Ringe (2) ein aktiv geführtes Lager (4) ist, das mindestens eine Leistungswicklung (8) mit einem zugeordneten Abstandmessfühler (10) aufweist, und dass die Vorrichtung weiterhin ein Mittel (32-33) umfasst zur Einstellung der Erregerströme der Leistungswicklungen (8) entsprechend der durch die jeweiligen Messfühler (10) gemessene Abstände zwecks Beibehaltung eines konstanten Luftspaltes "e" zwischen den jeweiligen Ringen (2) und der Welle (1) sowie ein Mittel (35) zur Bestimmung - ausgehend von diesen Erregerströme - des Bandzuges in den jeweiligen Magnetlager (4), der für die Bandplanheit repräsentativ ist.

2. Planheitsmessvorrichtung nach Anspruch 1, dadurch gekennzeichnet, dass jeder Ring (2$_a$, 2$_b$...) über zwei in der Längsachse an den jeweiligen Ringenden angeordneten Magnetlager (4$_a$, 4'$_a$) (4$_b$, 4'$_b$) auf der Welle (1) montiert ist.

3. Planheitsmessvorrichtung nach einem der Ansprüche 1 und 2, dadurch gekennzeichnet, dass jedes Magnetlager (4) aus mindestens zwei Leistungswicklungen (8) und mindestens zwei die Abstandmessfühler (10) bildenden Messwicklungen (10) besteht, wobei diese Leistungs- (8) und Messwicklungen (10) um die Wellenachse in winkelversetzten Lagen auf dieser Welle (1) befestigt sind.

4. Planheitsmessvorrichtung nach Anspruch 3, dadurch gekennzeichnet, dass jedes Magnetlager (4) aus vier auf der Welle (1) um 90° angeordneten Leistungsspulen (8$_a$, 8$_b$, 8$_c$, 8$_d$) mit paarweise ausgerichteten Achsen besteht sowie aus vier koaxial zu den Leistungsspulen (8) angeordneten Meßspulen (10$_a$, 10$_b$, 10$_c$, 10$_d$).

5. Planheitsmessvorrichtung nach Anspruch 3, dadurch gekennzeichnet, dass das Magnetlager aus mindestens zwei Paar in einem mit der Welle (14) fest verbundenen Magnetteil bearbeiteten Pole zur Aufnahme der Wicklungen (16 und 17) besteht, die gegenüber dem Auflagebereich des Metallbandes (22) auf der Rolle zu deren Achse liegen.

6. Planheitsmessvorrichtung nach Anspruch 5, dadurch gekennzeichnet, dass auf der Welle (1) ein bearbeitetes zwei Paar Magnetpole (15) bildendes Magnetteil zur Aufnahme der Wicklungen angeordnet ist, die zwischen einander senkrechte Magnetkräfte ergeugen, wobei die Messung der Erregerströme dieser Wicklungen zur Berechnung beider Komponenten der normalen Auflagekraft des Bandes auf der Rolle dient.

7. Planheitsmessvorrichtung nach einem der Ansprüche 1 bis 6, dadurch gekennzeichnet, dass sie ein Mittel aufweist zur Bestimmung der gesamten in dem Band bei der Rolle wirkende Zugspannung durch Summieren der Zugspannungen bei den jeweiligen Ringen (30).

8. Planheitsmessvorrichtung nach Anspruch 6, dadurch gekennzeichnet, dass sie ein Mittel aufweist zur Bestimmung des Bandablenkwinkels auf der Rolle, ausgehend von den Senkrechtkomponenten der Auflagekraft des Bandes (22) auf der Rolle.

## Claims

1. Device for measuring the flatness of a metal strip under tension, including a deflection roller which is transverse with respect to the strip and formed from a shaft (1) carrying a number of rings (2) rotatively mounted on the shaft (1), one after the other, in the axial direction of the roller, each by means of at least one magnetic bearing, each ring being associated with at least one detector (10), fixed on the shaft (1), for measuring the separation between the rotor and the stator of the magnetic bearing, characterized in that each of the magnetic bearings of each of the rings (2) is an active magnetic bearing (4) formed from at least one power winding (8) associated with at least one separation detector (10) and in that the device also includes at least one means of adjustment (32-33) of the energizing currents of the power windings (8) as a function of the separations measured by the corresponding detectors (10) in order to maintain a constant airgap "e" between each of the rings (2) and the shaft (1) and a means (35) of determination, from these energizing currents, of the traction in the strip at the position of each of the magnetic bearings (4), representing the flatness of the strip.

2. Device for measuring flatness according to Claim 1, characterized in that each of the rings (2$_a$, 2$_b$...) is mounted on the shaft (1) by means of two magnetic bearings (4$_a$, 4'$_a$) (4$_b$, 4'$_b$) situated at each of the longitudinal ends of the ring.

3. Device for measuring flatness according to either of Claims 1 and 2, characterized in that each of the magnetic bearings (4) is formed from at least two power windings (8) and at least two measuring windings (10) forming the separation detectors (10), the said power (8) and measuring (10) windings being fixed on the shaft in positions that are angularly offset around the axis of this shaft (1).

4. Device for measuring flatness according to Claim 3, characterized in that each of the magnetic bearings (4) is formed from four power windings (8$_a$, 8$_b$, 8$_c$, 8$_d$) placed at 90° on the shaft (1) with their axes aligned in pairs and from four measuring windings (10$_a$, 10$_b$, 10$_c$ and 10$_d$) which are coaxial with the power windings (8).

5. Device for measuring flatness according to Claim 3, characterized in that the magnetic bearing is formed from at least two pairs of poles machined from a magnetic part integral with the shaft (14) on which the windings are wound (16 and 17), placed in a position opposite the bearing area between the strip (22) and the roller with respect to the axis of the roller.

6. Device for measuring flatness according to Claim 5, characterized in that the shaft (14) carries a machined magnetic part in order to form two pairs of magnetic poles (15) on which are placed windings (16-17) creating magnetic forces perpendicular to each other, the measurement of the energizing currents of these windings enabling the computation of two components of the normal bearing force of the strip on the roller.

7. Device for measuring flatness according to any of Claims 1 to 6, characterized in that it includes a means of determining the total traction exerted in the strip at the position of the roller, by totalling the tractions at the positions of each of the rings (30).

8. Device for measuring flatness according to Claim 6, characterized in that it includes a means of determining the angle of deflection of the strip on the roller, from the perpendicular components of the bearing force of the strip (22) on the roller.

Fig 1

Fig 2

Fig 3

# Fig 4